# EUROPÄISCHE PATENTANMELDUNG

(11) **EP 0 683 307 A1**
(43) Veröffentlichungstag der Anmeldung: **22.11.1995**
(21) Anmeldenummer: 95106961.6
(22) Anmeldetag: 09.05.1995
(51) Int. Cl.: F02B 47/02

(54) **Vorrichtung zum Einspritzen von Wasser in Dieselmotoren**

(30) Priorität: 13.05.1994 DE 4416886
(71) Anmelder: Krupp MaK Maschinenbau GmbH, D-24159 Kiel (DE)
(72) Erfinder: Nagel, Jürgen, Dipl. Ing., D-24214 Gettorf (DE)
(74) Vertreter: Hansmann, Dierk, Dipl.-Ing.

(57) **Zusammenfassung**

Bei dieser Einrichtung wird in die Einlaßstutzen (8) des Motors (D) vor den Einlaßventilen jeweils über eine Wasser-Einspritzdüse (3) Wasser mit hohem Druck eingespritzt. Diese Einspritzung erfolgt in arbeitszyklischer Abhängigkeit von der Bewegung der Ventile bzw. der Kolben des Motors.

## Beschreibung

Die Erfindung bezieht sich auf eine Vorrichtung zum Einspritzen von Wasser in Dieselmotoren in Abhängigkeit von arbeitszyklischen Bewegungen der Einlaßventile bzw. der Kolben des Motors.

Aus der DE-AS 27 27 979 ist eine Vorrichtung zur Einspritzung von Wasser in die Zylinder einer Brennkraftmaschine bekannt. Diese Wassereinspritzung erfolgt in Abhängigkeit von der Bewegung der Ventile.

Aufgabe der Erfindung ist es, eine Einrichtung zum Einspritzen von Wasser in einem Dieselmotor zu schaffen, die eine einfache Ausbildung ermöglicht und eine Reduktion von Stickoxyden gewährleistet.

Diese Aufgabe wird erfindungsgemäß durch die kennzeichnenden Merkmale des Anspruchs 1 gelöst. Weitere vorteilhafte Ausbildungen sind durch die Merkmale der Unteransprüche gekennzeichnet.

Die erzielten Vorteile bestehen darin, daß durch die Anordnung von Wasser-Einspritzdüsen an jedem Einlaßstutzen zu den einzelnen Zylindern des Dieselmotors eine optimale Wirkung hinsichtlich der Reduktion von Stickoxyden (NOx) bewirkt wird. Durch die gesteuerte Zuführung des Wassers mittels der geregelten Ventile, kann eine Einspritzung in Abhängigkeit von der Zündfolge des Motors durchgeführt werden, so daß das Wasser während des Einsaughubes eingespritzt und angesaugt wird. Auch ist über die Auslegung der Ventile der Druck und die Menge des Wassers entsprechend steuerbar.

Die Düsen für die Wassereinspritzung sind mit einer Druckwasserleitung verbunden, die von einer Wasserpumpe gespeist werden, so daß über zu den Einlaßstutzen geführte Abzweigleitungen, das Druckwasser direkt zu den Wasserdüsen geleitet wird.

Als Ventile werden elektrisch, hydraulisch oder pneumatisch angesteuerte Ventile verwendet, wobei das elektronische Steuergerät, als Rechner ausgeführt ist und diesem ein Pulsverstärker nachgeschaltet ist. Als Eingangssignale dienen unter anderem Drehzahlparameter, Stellung des Kolbens und/oder der Betriebszustand des Dieselmotors.

Neben der wirkungsvollen Verringerung von Schadstoffanteilen, insbesondere von Stickstoffverbindungen im Abgas wird durch die Wassereinspritzung auch die Betriebstemperatur im Zylinder/Kolben-Bereich verringert, wodurch die Lebensdauer des Motors verlängerbar ist.

Ein Ausführungsbeispiel der Erfindung ist in der Zeichnung schematisch dargestellt und wird im folgenden näher beschrieben. Es zeigen:

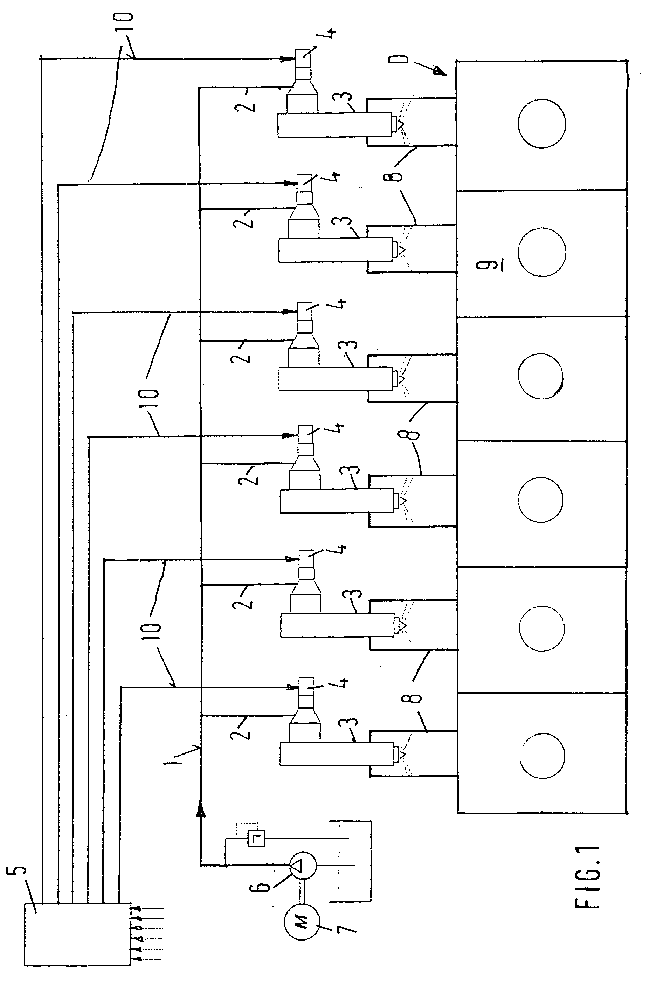

- Fig.1: eine Prinzipdarstellung der Wassereinspritz-Vorrichtung mit Steuerung und
- Fig. 2: eine Anordnung der Wassereinspritzdüse im Einlaßstutzen des Motors.

Bei einem Dieselmotor D ist zur Reduktion von Stickoxyden (NOx) eine Vorrichtung zur Wassereinspritzung vorgesehen. Diese umfaßt im wesentlichen ein Leitungssystem 1,2 zur Zuführung von Druckwasser, sowie Einspritzdüsen 3 mit vorgeschalteten Ventilen 4, die mit einem Steuergerät bzw. einem Rechner 5 in Verbindung stehen.

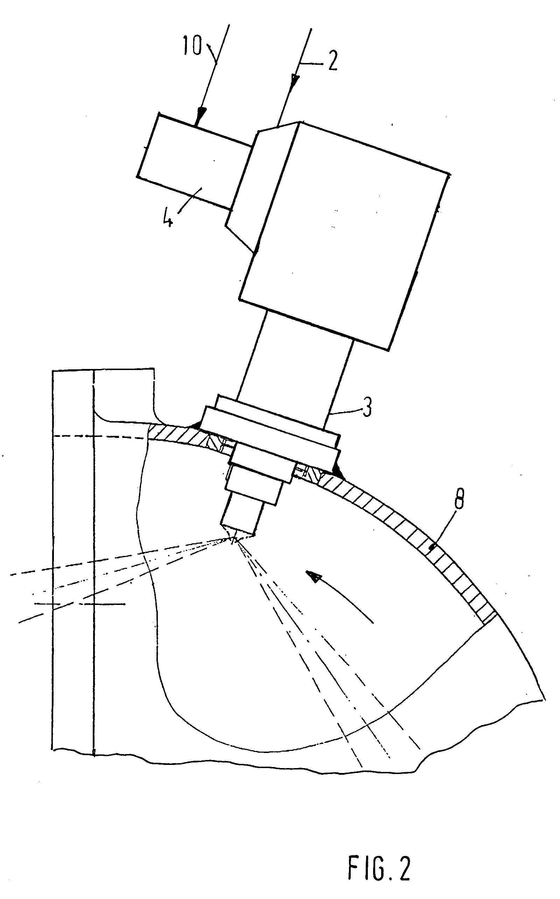

Hierbei ist eine Wasser-Hauptleitung 1 an eine Pumpe 6 angeschlossen, die über einen Motor 7 betrieben wird. Von der Hauptleitung 1 zweigen Nebenleitungen 2 ab, die mit Wasser-Einspritzdüsen 3 verbunden sind, wobei jeweils Ventile 4 vorgeschaltet sind. Die Einspritzdüse 3 ist in einem Einlaßstutzen 8 vor einem Einlaßventil angeordnet, wie in Fig. 2 dargestellt ist.

Die Einspritzdüse 3 fördert das Druckwasser in den Stutzen 8 und von hier aus wird beim Einsaughub des Kolbens Wasser teilweise in die Zylinder des Motors gesogen.

Über das Steuergerät 5 wird die Wassereinspritzung in Abhängigkeit von der Zündfolge des Motors geregelt. Dieses geschieht in der Weise, daß das Druckwasser nur während des Einsaughubes in den Einlaßstutzen 8 eingespritzt wird. Für diesen Zweck kann das Steuergerät 5 über Parameter, wie beispielsweise Drehzahl, Stellung des Kolbens und momentaner Betriebszustande des Motors, angesteuert werden. Zudem kann am Kipphebel der Ventile auch ein Näherungsschalter angeordnet sein. Das Steuergerät 5 ist über elektrische Leitungen 10 mit den einzelnen Ventilen 4 der Wasser-Einspritzdüsen 3 verbunden.

Bei dem vorgeschalteten Ventil 4 handelt es sich beispielsweise um ein Magnetventil. Wesentlich ist es, daß der Wasserdruck und die Wassermenge über die Öffnungszeit exakt ansteuerbar sind.

## Patentansprüche

1. Vorrichtung zum Einspritzen von Wasser in Dieselmotoren in Abhängigkeit von arbeitszyklischen Bewegungen der Einlaßventile bzw. der Kolben des Motors, **dadurch gekennzeichnet**, daß in den Einlaßstutzen (8) vor den Einlaßventilen jeweils eine Wasser-Einspritzdüse (3) angeordnet ist, der über ein Steuergerät (5) regelbares Ventil (4) vorgeschaltet ist und das Ventil (4) in Abhängigkeit der Zündfolge des Motors derart geöffnet wird, daß das Wasser während eines Einsatzhubes in den Einlaßstutzen (8) einspritzbar ist.

2. Vorrichtung nach Anspruch 1, **dadurch gekennzeichnet**, daß eine Druckwasserleitung (1) mit einer Druckwasserpumpe (6) sowie einem Motor (7) verbunden ist Nebenleitungen (2) zu jedem Einlaßstutzen (8) des Zylinders (9) des Motors abzweigen.

3. Vorrichtung nach Anspruch 1 oder 2 **dadurch gekennzeichnet**, daß zur Steuerung der Ventile (4) für die Wasser-Einspritzdüse (3) Näherungsschalter an Kipphebel in der Ventile (4) angeordnet sind.

4. Vorrichtung nach einem der Ansprüche 1 bis 3, **dadurch gekennzeichnet**, daß das elektrische Steuergerät (5) aus einem Rechner mit nachgeschalteten Pulsverstärker gebildet ist und die Eingangssignale aus Drehzahlparameter, Stellung des Kolbens und/oder des Betriebszustandes des Motors bestehen.

5. Vorrichtung nach einem der Ansprüche 1 bis 4, **dadurch gekennzeichnet**, daß die Wasser-Einspritzmenge der Düse (3) mittels des Ventils (4) über den Druck einstellbar ist.

6. Vorrichtung nach einem der Ansprüche 1 bis 4, **dadurch gekennzeichnet**, daß die Wasser-Einspritzmenge der Düse (3) mittels des Ventils (4) über die Öffnungszeit einstellbar ist.

7. Einrichtung nach einem der Ansprüche 1 bis 6, **dadurch gekennzeichnet**, daß als Ventil (4) ein Magnetventil eingesetzt wird.
